# EUROPEAN PATENT SPECIFICATION

(11) **EP 3 397 524 B1**
(45) Date of publication and mention of the grant of the patent: **21.07.2021**
(21) Application number: 16882466.2
(22) Date of filing: 23.12.2016
(51) Int. Cl.: H04W 12/062, H04W 12/065, H04W 12/069, H04W 4/80, H04L 29/06, B60N 2/00

(54) **VEHICLE SECURITY SYSTEM EMPLOYING SEAT BASED OCCUPANCY DETECTION AND BODY AREA NETWORK**
FAHRZEUGSICHERHEITSSYSTEM MIT SITZBASIERTER BELEGUNGSERKENNUNG UND KÖRPERNAHEM NETZWERK
SYSTÈME DE SÉCURITÉ DE VÉHICULE UTILISANT UNE DÉTECTION D'OCCUPATION BASÉ SUR LE SIÈGE ET UN RÉSEAU CORPOREL

(30) Priority: 02.01.2016 US 201662274277 P; 17.03.2016 US 201615073023
(43) Date of publication of application: 07.11.2018
(73) Proprietor: TK Holdings Inc., Auburn Hills, MI 48326 (US)
(72) Inventor: CECH, Len Steven, Auburn Hills Michigan 48326 (US); LISSEMAN, Jason Carl, Auburn Hills Michigan 48326 (US)
(74) Representative: Fischer, Uwe
(86) International application number: PCT/US2016/068518
(87) International publication number: WO 2017/117050

(56) References cited:
- US-A1- 2013 176 100
- US-A1- 2014 162 586
- US-A1- 2014 162 586
- US-A1- 2015 210 287
- US-A1- 2015 379 793
- US-B2- 9 008 641
- US-B2- 9 008 641

## Description

### GENERAL DESCRIPTION

The present application claims priority to and the benefit of U.S. Provisional Patent Application No. 62/274,277, filed January 2, 2016 and U.S. Patent Application No. 15/073,023, filed March 17, 2016.

### BACKGROUND

The present application relates generally to vehicle communication systems, in particular communication systems relating to automotive vehicles. These vehicle communication systems allow communications to be shared between the vehicle network and external devices.

U.S. Patent Application US 2014/162586A1 discloses a system comprising the features of the preamble of claim 1. More specifically, this document describes a system to electronically connect an electronic device to a network includes a sensing electrode that provides a signal. The signal has a particular frequency and power, and the electrode is configured to transmit the signal through a person occupying a proscribed location. The electronic device is configured to detect the signal when the electronic device is coupled to a person occupying the proscribed location. The electronic device is configured to electronically couple to the network upon detecting the signal.

U.S. Patent US 9 008 641 B2 discloses a method of determining a location of a wireless device relative to a vehicle using received data.

The increased use of mobile electronic devices, particularly mobile communication devices, currently allows for continuous communication, entertainment, and the transfer of information from nearly any location. As a result, many individuals carry such electronic devices in direct physical proximity to their bodies throughout the day. In the future, it is expected that increasingly more individuals will carry such devices, and also in increasing numbers per individual. Also, in appropriate situations (e.g., to address health care related situations), communication devices may also be permanently or semi-permanently installed in or on individuals.

Vehicles utilize internal networks (e.g., CAN, Flexray, ethernet) and external networks (e.g., Bluetooth, WiFi, and Cellular). The external network often allows widespread access to the vehicles internal network by personal and mobile electronics such as computers, cellular phones and wearable devices. Often the internal and external networks share a common secured gateway. The gateway may include certain security measures. These security measures may include an internal network firewall and/or access restriction methods (e.g., usernames, passwords) to control access from the external to the internal network through the gateway.

A vehicle can be configured to allow remote pairing of a mobile electronics device with the vehicle network through Bluetooth or WiFi as long as the mobile electronic device is within an acceptable distance for communication. The acceptable distance can extend significantly beyond the physical boundaries of the vehicle (e.g., cellular networks). Such pairings can support convenience and comfort features such as "hands free" infotainment, web access, vehicle state controls (e.g., remote unlocking of the vehicle).

There are various systems and methods to electronically couple or "pair" a mobile electronic device with a fixed communication network (e.g., a vehicle communication bus or network). Such systems may require a user to perform an initial setup process between the fixed communication network and the electronic device (e.g., a setup process may identify a particular electronic device by using a serial code, mobile equipment identifier (MEID), or similar identifier). Further, each new user, and each additional device may be required to undergo an initial setup process.

A system or method for automated network pairing using electric field coupling may require an electronic device to include hardware that can receive or transmit a signal to the fixed communications network. A system or method for automated network pairing using electric field coupling may also require software to interface with the fixed communications network or detect a signal transmitted by the fixed communications network. Such an electronic device that is in proximity to detect a signal transmitted by the network may be controlled by the cooperatively installed software on the device.

A wireless transmitter for a vehicle communication bus or network, may transmit a signal to an electronic device that includes information relating to a condition of a network. In the case of a vehicle, the information in a signal may include whether the vehicle is in motion or in gear. Depending on the information included in the signal, the application software may control various features of the electronic device. For example, cooperatively loaded application software on the electronic device may use information from a signal to limit the handheld use of the device or to provide cellular notification to back-end services (e.g., speed alerts).

Vehicle manufacturers may want to provide occupants of a vehicle with access to the vehicle's internal network to allow for the occupants to take advantage of certain applications related to an occupants comfort and convenience. Certain applications may be downloaded from a manufacturer or other party sites onto an occupant's mobile electronic device such as a personal cellular phone/tablet. The applications allow the user to access information (e.g. electrical charge, diagnostic information) through a wireless connection to the vehicle network. Some applications also may allow the user request a vehicle action (e.g. remote door lock, reconfiguration of user specific comfort settings). The functions of these applications may differ depending on whether the occupant is the driver or a passenger.

A system or method that can detect, electronically couple with, and control an electronic device may not distinguish between a device used by an intended user (i.e., an authorized driver or occupant of a vehicle) and an unintended user. The expected proliferation of vehicle external access applications available on mobile electronic devices and the expected proliferation in vehicles create a potential for unauthorized users to use the vehicle network for improper purposes. Additionally, this proliferation may make it difficult for existing wireless networking methods to filter out only viable users who are already in the vehicle. When there are a large number of overlapping wireless networks, and also a large number of electronic devices within pairing range of those overlapping networks, it may be difficult (and/or time consuming) for the software and algorithms supporting the network process to determine which network pairings should be supported.

### BRIEF DESCRIPTION OF THE DRAWINGS

Features, aspects, and advantages of the present disclosure will become apparent from the following description, and the accompanying exemplary embodiments shown in the drawings, which are briefly described below.
FIG. 1 is a schematic side view of a vehicle interior showing an exemplary system for facilitating the communication between an electronic device and the vehicle.
FIG. 2 is a schematic view of an exemplary system for communication between mobile electronic devices and a vehicle.

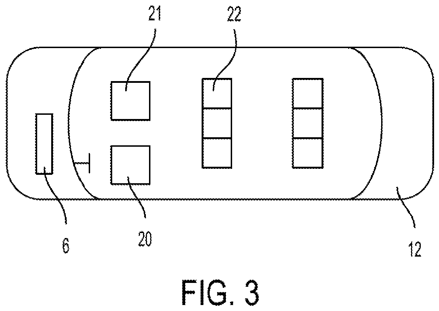

FIG. 3 is a schematic view of a vehicle interior showing a front and rear seat configuration.

### DETAILED DESCRIPTION

Various embodiments of the present disclosure will be described below with reference to the drawings. It is to be understood that both the foregoing general description and the following detailed description are exemplary and explanatory only, and are not restrictive of the disclosure.

According to an exemplary embodiment, a system and method may identify and establish a communication paradigm between a fixed network and an electronic device in which the communication medium is through the human body. In addition, the system and method may be configured to provide a connection between the mobile electronic device and the fixed network (i.e., the vehicle network) via a pairing type process such as, for example, WIFI, Bluetooth, Near Field Communication, etc.

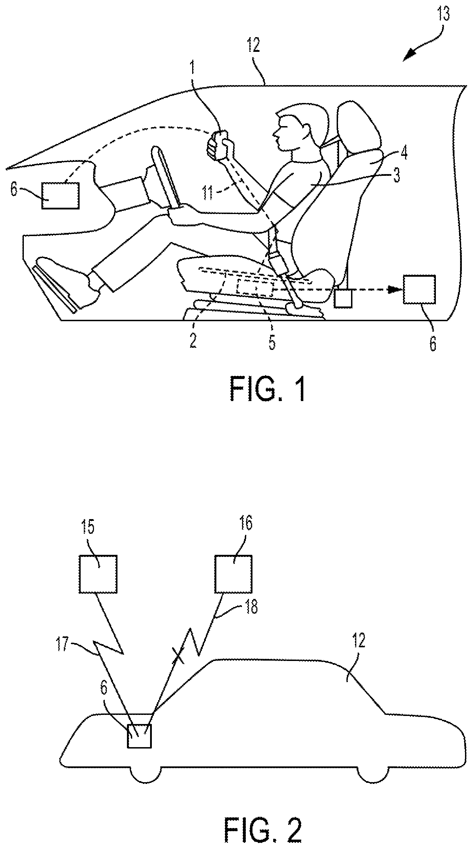

As shown in FIG. 1, and according to an exemplary embodiment, a communication system 11 may be used to electronically couple or pair a fixed communications network, such as a vehicle communications bus 6, with a mobile electronic device 1. A driver 3 of a vehicle 12 may be seated on a vehicle seat 4, and an electronic device 1 may be coupled to the driver (e.g., an electronic device 1 may be held in the hand of the driver 3, in a pocket of the driver's clothes, or in any other location that is sufficiently proximate to the driver). A system 13 used to electronically couple an electronic device to a network may include an electrode. The electrode is preferably located in a sensor pad 2 provided in a vehicle seat 4 within a vehicle 12. While the sensor pad 2 may be provided in a driver's seat 4 of a vehicle, this disclosure is not intended to limit the possible locations in which a sensor pad may be located. Therefore, according to alternative embodiments, a sensor pad may also be located anywhere in a vehicle interior (i.e., in a passenger seat, the vehicle floor, an arm rest, the steering wheel, a cup holder, etc.).

The sensing electrode, shown as a sensor pad 2, may be used to detect the presence or occupancy of a person or object that is positioned within a prescribed location. Further, sensor pad 2 may be configured to detect various characteristics of an object, such as its position on a seat. Sensor pad 2 may also be used to discriminate or categorize the object (e.g., person, baby seat, shopping bag, etc.), and to detect other characteristics of the object (e.g., stature, position, loading, etc.). Thus, the sensor pad 2 may be provided as a component of an occupant detection or classification system.

The system 13 may be configured to transmit a signal 11 through a person positioned within a prescribed area or in a designated location. For instance, the signal 11 may have a particular frequency and power, and the frequency of signal 11 may be configured to allow it to be redistributed through the person via electric field coupling when the person is positioned within a prescribed location. Such a signal may be configured so that it is not strong enough to be transmitted through the air surrounding a person positioned within a prescribed location. The carrying of the signal 11 through the body of the occupant creates a body area network.

According to the exemplary embodiment shown in FIG. 1, the sensor pad 2 may transmit a signal 11, which may be configured to be redistributed via the body area network through the driver 3 that is sitting on the seat 4. According to an alternative embodiment, a sensor pad may be disposed within a floor, armrest, seatbelt or other location proximate to the boy of the occupant.

Sensor pad 2 may be electronically coupled to support electronics 5 which may be configured to measure the amount of electric field coupling between sensor pad 2 and objects proximate the sensor pad. According to an exemplary embodiment shown in FIG. 1, the support electronics 5 may be, in turn, electronically coupled to the vehicle communication bus 6. The capacitive sensing subsystem employed with the system may be similar to the systems disclosed in U.S. Patent No. 6,392,542 and U.S. Published Application No. 2007/0200721.

As shown in FIG. 1, and according to various exemplary embodiments of this disclosure, an electronic device 1 may be configured to detect the signal 11 when the signal is transmitted through a person, and the electronic device 1 is coupled and positioned in proximity to the person. According to the embodiment shown in FIG. 1, an electronic device 1 may be configured to detect the signal 11 carried by the body area network when electronic device 1 is positioned within a prescribed location, such as the driver's seat of a vehicle. The detection of the signal may be conducted utilizing a tuning circuit located in the electronic device. Exemplary tuning circuits are disclosed, for example, in U.S. Published Patent Application No. 2011-0117863.

Further, when an electronic device detects signal 11, a response of the device may be to electronically couple, or interface, with a fixed communications network, such as a vehicle communication bus 6. An electronic device 1 may also include hardware and/or software to facilitate or control the coupling of the electronic device to a fixed communications network.

According to an exemplary embodiment, the signal 11 may be configured to carry particular information used to distinguish it from other signals, such as digital or analog information. Further, the power of the signal 11 may be configured to be sufficiently strong to be transmitted through a person who is coupled to an electric field generated by a sensor circuit, but not sufficient to be transmitted from the person's body. Therefore, an electronic device may be configured to detect the signal 11 only when the person is concurrently coupled to the electronic device and the electric field. When the electronic device detects the signal 11, it may distinguish the signal based on the information contained in the signal.

According to an exemplary embodiment, upon detection of the signal 11, the electronic device 1 may initiate a pairing process with a fixed communications network in which the electronic device 1 automatically connects to the network. A pairing process may be accomplished in a variety of ways. For example, in order to ensure the security of the connection, the electronic device 1 may initiate the pairing process by transmitting a wireless signal to the network. In order for the network to distinguish the signal transmitted from the electronic device 1, and to ensure the security of the connection between the device and the network, the signal may be configured to have a particular frequency or to carry particular information, such as a security token. The electronic device 1 and the network may perform a variety of processes in order to maintain security there between. For example, the device and network may be time-synced and the network may use an algorithm to determine a random frequency pattern that is shared with the electronic device 1.

The vehicle network 6 may be configured to transmit a wireless signal to a surrounding area when a person is detected within a prescribed location (e.g., a prescribed location may be proximate a sensing electrode that transmits a capacitive signal). The wireless signal transmitted from the network 6 may use an authorization or identification process to establish a secure connection with an electronic device. Such an identification process may require the electronic device 1 to transmit a signal having particular information to the network. Concurrently, the electronic device 1 may be coupled to a capacitive signal that is transmitted from a prescribed location, and the signal may contain particular information. When the electronic device detects the capacitive signal, it may use the particular information contained within the capacitive signal to satisfy the network's authorization or identification process. In order to maintain a secure connection, the electronic device 1 and the network may be time-synced and the network may use an algorithm to determine a random frequency pattern that is shared with the electronic device 1. While some examples have been described in which a network may automatically connect with the electronic device 1, it should be understood that the network and the electronic device 1 disclosed herein may perform a variety of methods in order to automatically establish a connection, according to other exemplary embodiments.

According to yet another embodiment of this disclosure, a method to electronically couple an electronic device to a fixed communication network may transmit an electronic signal from a sensing electrode to a person occupying a prescribed location and coupled to the electronic device. Based upon detection of the signal by the electronic device, the electronic device may electronically couple the electronic device to the network. In such a method, the signal may be configured to be redistributed through a person via electronic field coupling. Further, the electronic device may have to be coupled to the person in order to detect the signal.

A system or method may use electric field coupling to electronically couple or pair an electronic device 1 with a network may generate a signal having a capacitive coupled frequency. For example, an electrode in a capacitive sensing subsystem may transmit a signal having a capacitive coupled frequency. The signal may be configured to be transmitted across a person who is sufficiently proximate to an electrode or sensing pad generating the signal. A tuned circuit of an electronic device 1 that is sufficiently proximate to the person's body may detect the signal having a capacitive coupled frequency. An electronic device 1 may be configured to detect a signal having a capacitive coupled frequency, and either a communication module or the electronic device 1 may be configured to automatically pair with a network that is electronically coupled to the capacitive sensing subsystem.

A sensor pad and supporting electronics may cooperate with hardware and software added to an electronic device to detect the location and possession of the device. According to an exemplary embodiment, when an electronic device is detected in a particular location, this information may be used, for example, to disable the use of an electronic device in possession of the driver while the vehicle is operational. In a similar fashion, a system may be configured to detect and control an electronic device 1 that is placed on an unoccupied seat (e.g., when a driver places a cell phone on an empty passenger seat).

According to alternative embodiments of this disclosure, a sensor pad may be incorporated into various other vehicle compartments. For example, a sensor pad may be embedded in a cup-holder, a phone receptacle or another location where an electronic device may be placed. According to an alternative embodiment, a sensor pad 2 may be located in a passenger seat, and configured to generate a signal 11 having a capacitive coupled frequency. An electronic device 1 may detect signal 11 via electronic field coupling when the device is placed on the seat, or when the device is otherwise within sufficient proximity of signal 11. When electronic device 1 detects signal 11, various hardware or software of electronic device 1 may automatically control its use while the vehicle is in motion. Also, hardware or software of electronic device 1 may electronically couple or pair the device with a vehicle communication bus 6 and enable hands-free technology.

According to alternative embodiments of this disclosure, a system to electronically couple an electronic device and a fixed communications network may be utilized in a wide variety of locations, including personal and public transportation vehicles, homes, schools, business locations, and other venues. Advantageously, several personalized and selectable communications modes, which are based on the physical location of an electronic device, may exist for particular systems used to electronically couple an electronic device and a fixed communications network. may be configured to operate in the system may include personalized, selectable communication modes based on physical locations (e.g., a car driver mode, a car passenger mode, a bus mode, a plane mode, a train mode, a theater mode, etc.) where the characteristics of the automated network would be set based on mode (e.g., cell phone ringer disabled in movie theater; hands-free enabled in car driver seat; music/video playback enabled in bus, infotainment system enabled in a plane seat back, etc.).

Advantageously, according to various embodiments of this disclosure, a system 13 may allow a single fixed communications network, such as a HMI, to be customizable by a specific human touch by allowing a user interface to function differently for multiple proximal occupants. In other words, a HMI may distinguish between a person who is positioned within a particular location, and a person positioned in an alternative location. For example, an HMI in the form of a dash-mounted touch screen in a vehicle may be configured to function in a first manner with respect to a driver of the vehicle, and in a second manner for a passenger of the vehicle.

A system 13 may be configured so that the electric field characteristics of the sensor pad change from a first configuration (i.e., a normal operating configuration) to a second configuration when a vehicle event occurs. A signal having a second configuration may enable an alternative means of network communications between an electronic device 1 and a fixed communications network. For example, if a vehicle experiences an event, such as a vehicle collision, or a roll-over, sensor pad 2 may transmit a signal having a second configuration which all electronic devices within the vehicle compartment may be configured to detect. When an electronic device detects a signal having a second configuration, the device may be configured to automatically initiate an emergency phone call.

The system includes using the body area network established through the vehicle occupant and the mobile electronic device to provide enhanced security for the vehicle network 6 to ensure that only authorized devices are connected to the network. These mobile electronic devices include any device that can establish communications with the body area network such as, for example, hand held, on -body, and in-body devices.

The system is configured to provide security to prevent unauthorized access to the vehicle network for those mobile device applications that allow access to the vehicle via a wireless connection (e.g., cellular networks). For example, certain applications allow a user to unlock the vehicle using a mobile device. In order for a mobile device to successful use such an application to connect to the vehicle network and control the vehicle, a security system and method has been established. Successful use of the application requiring remote vehicle access requires that an established security token has already been enabled through an a-priori procedure where the individual user of the cellular phone must sit in a seat of the vehicle (preferably the driver seat) to establish both a wireless and BAN network with the vehicle (as described above). If both networks are established successfully a security token would be provided to the mobile electronic device to allow the software application to function to connect to the vehicle network remotely.

The system may include an additional requirement that the user of the mobile device provide an acknowledgement of the transfer of the security token to the device by activating a particular key or number on a touchpad of mobile device. Thus, the user would be required to enter an authentication code, as an additional mechanism for ensuring approved access to the network. In addition, the security token could be time duration limited to ensure that the status of the mobile device user as an occupant (e.g., driver) of the vehicle is frequently established. Thus, the vehicle network could be configured to ensure that the network no longer accepts the security token to allow access after a predetermined time period has passed. Such a system is configured to ensure that a vehicle owner could limit the cellular access to only those wireless network devices (e.g. cellphones) possessed by trusted individuals (e.g. family members, fleet drivers, rental drivers, ...). In addition, the vehicle network could be configured to generate a record that includes any attempted access through approved and un-approved credentials.

The system may be configured to prompt the user of the mobile electronic device to provide the optional authentication code mentioned above. The user may be prompted to interact with the mobile device. For example, the mobile electronic device may be controlled to generate a display that appears when the device is connected via a body area network that provides the following exemplary message to the user: "vehicle has identified that you are sitting in the driver [passenger, rear passenger right, rear passenger left, ....] seat of the vehicle, press button to confirm." The message could be enhanced to include the name of the user or the device based on distinguishing information contained in the device. The information may be provided by, for example, an identification system contained in the device such as, for example, a fingerprint, touch, or other physiology based system. In addition, the message could be enhanced to optionally include a description of the vehicle make, model or other distinguishing information.

The system is configured so that access to the vehicle network by mobile electronic devices located outside the vehicle 12 is protected to only those devices that have been authorized via the security procedure utilizing the body area network. As shown in Fig. 2, an authorized mobile electronic device 15 may connect to the vehicle network 6 via a wireless 17 connection. However, an unauthorized mobile electronic device 16 attempting to access the vehicle network 6 via a wireless connection 18 is blocked.

The system may be configured so that the security token is provided to the vehicle occupant in advance of the occupant entering or approaching the vehicle. For example, in order to establish the driver as an authorized user of the vehicle the security token can be provided to the occupant/driver's mobile device in advance via a registration process so that upon entering the vehicle and establishing a connection via a body area network the vehicle network recognizes the occupant as an authorized driver of the vehicle (e.g., ride sharing vehicle, a rental car, fleet vehicle). The security token may be conveyed to the mobile electronic device after completing the registration process via a number of acceptable mechanisms such as, for example, text messaging, Texting, SMS, email, separate specific application, downloaded from web page, etc.
Similarly, the occupant can recognize the vehicle as the correct vehicle for carrying the occupant once the occupant is in the vehicle (e.g., taxi or car service). The system may be configured so that if the occupant does not possess an authorized security token on the mobile electronic device, operation of the vehicle could be restricted.

The system also can be configured to control network access for a mobile electronic device being operated by an occupant of the vehicle. Thus, the system can provide security to the network for devices utilizing wireless (e.g., Bluetooth, WiFi, NFC) access to the vehicle network while seated in the vehicle. The vehicle occupants could be using their devices to access vehicle infotainment systems or vehicle based web services. The system is configured so that in order to provide for use of the application software on the mobile electronic device (i.e., cellular device) an established security token is enabled through an a-priori or simultaneous procedure where the user of the cellular phone must sit in a vehicle seat to establish both a connection with the vehicle through a body area network. In addition, the system may be configured to require the user provide an authentication code (e.g., by contacting phone keys). If the connection is established successfully, a security token would be sent to the mobile electronic device for use by the application software.

The system would be configured so that the security token remains valid only while the occupant occupies the seat and could be terminated as soon as the body area network, WiFi or Bluetooth network connections are terminated. The system may be configured so that access levels for a vehicle occupant may be established based on the location of the seat. For example, an occupant of a driver seat 20 may have full network access rights while an occupant of a passenger seat 21 may have reduced access rights (e.g., tier 1) and an occupant of a rear seat 22 may have yet a lower level (e.g., tier 2) of access rights. As described herein, this embodiment of the system would be configured to allow vehicle network access to only those mobile electronic devices (e.g., cellular devices) located within the vehicle based on seat occupancy, and only while the seat(s) are occupied. As mentioned above, the security access level could be assigned based on seating position/role (such as, for example, driver seat-top secret; front passenger-secret; rear passenger-confidential). Access level could also be influenced based on information contained within the mobile electronic device that is connected with the body area network (e.g., a fleet owner sitting in driver seat may have full access to all vehicle information, whereas a fleet driver, may have much less extensive vehicle information). Thus, the specific mobile electronic device may have stored data or information that indicates the security level access of the user of the device and may be conveyed to the vehicle network (e.g., when the device is connected to the body area network).

The system is configured so that once the primary electronic device is connected to the vehicle via the body area network, the device would remain connected to the vehicle network so long as the device is within the vehicle. The device location could be established via wireless protocol methods - such as Bluetooth - or may be established via location sensors. For example, the location could be detected using a proximity sensor such as a charging pad or an electric field (i.e., capacitive type) proximity sensor. The location of the device could also be established using an indoor positioning system such as disclosed in, for example, U.S. Patent No. 8,265,011. When the device were is removed from the confines of the vehicle the connection between the device and the vehicle would be disabled and a new primary connection to the body network would be required before connection to the vehicle network would be permitted.

After the security token has been received by the mobile electronic device, the system may be configured to provide additional secondary security interlocks. These secondary security features may rely upon additional electric field type sensing systems installed in the vehicle. For example, a steering wheel based electric field detection system may be utilized. Alternatively, or in addition to, electric field type proximity sensors located in the floor mats, arm rests, or seat belt may be used to provide secondary security. For example, the same security token (or other authentication code) may be periodically passed from the occupant's seat through the driver to the hand detection system mounted on the steering wheel and on to the vehicle network. Failure of the network to receive the authentication information via the body area network and secondary sensing system would cause the network to terminate the connection with the mobile electronic device. This exemplary secondary security system ensures that the link between the driver and the seat has not been lost for a specific period of time in order to ensure that the driver's connection to the network (and the associated driver's rights) is being granted appropriately.

In the proposed system, the security of the existing external network connections (discussed above), can be vastly enhanced by requiring all personal electronics that want to request network access using the current supported methods, undergo an a-priori or simultaneous successful secure pairing transaction that includes use of a body area network. The disclosed system requires a connection via the body area network and a second connection including, for example, the transfer of a security token. In some respects the system is similar to use of a two man rule or use of a Permissive Action Link (PAL) protocol, which requires multiple simultaneous events to confirm an intended action, and thus limit inadvertent or nefarious access. Similarly, the use of the security token provides for a secondary level of security through possession of a token at the initiation of secure network access, or even possession of the token during secure network access. One example of a security token is disclosed in U.S. Patent No. 8,973,091. In addition, U.S. Patent No. 8,751,065 describes an authentication for a mobile electronic device and a vehicle network.

Neither of these patents discloses the use of a secondary level of security, such as the use of a body area network, for example.

Advantageously, one skilled in the art will appreciate that a system may be configured to provide enhanced security when electronically coupling to an electronic device by dependently relying on occupancy or physical possession of a particular device. Further, additional security may be provided, in addition to other limitations, such as requiring a password, an encryption, and other wireless connectivity limitations.

For purposes of this disclosure, the term "coupled" means the joining of two components (electrical, mechanical, or magnetic) directly or indirectly to one another. Such joining may be stationary in nature or movable in nature. Such joining may be achieved with the two components (electrical or mechanical) and any additional intermediate members being integrally defined as a single unitary body with one another or with the two components or the two components and any additional member being attached to one another. Such joining may be permanent in nature or alternatively may be removable or releasable in nature.

The present disclosure has been described with reference to example embodiments, however persons skilled in the art will recognize that changes may be made in form and detail. For example, although different example embodiments may have been described as including one or more features providing one or more benefits, it is contemplated that the described features may be interchanged with one another or alternatively be combined with one another in the described example embodiments or in other alternative embodiments. Because the technology of the present disclosure is relatively complex, not all changes in the technology are foreseeable. The present disclosure described with reference to the exemplary embodiments is manifestly intended to be as broad as possible. For example, unless specifically otherwise noted, the exemplary embodiments reciting a single particular element also encompass a plurality of such particular elements.

Exemplary embodiments may include program products comprising computer or machine-readable media for carrying or having machine-executable instructions or data structures stored thereon. For example, the sensing electrode may be computer driven. Exemplary embodiments illustrated in the methods of the figures may be controlled by program products comprising computer or machine-readable media for carrying or having machine-executable instructions or data structures stored thereon. Such computer or machine-readable media can be any available media which can be accessed by a general purpose or special purpose computer or other machine with a processor. By way of example, such computer or machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of computer or machine-readable media. Computer or machine-executable instructions comprise, for example, instructions and data which cause a general purpose computer, special purpose computer, or special purpose processing machines to perform a certain function or group of functions. Software implementations of the present disclosure could be accomplished with standard programming techniques with rule based logic and other logic to accomplish the various connection steps, processing steps, comparison steps and decision steps.

It is also important to note that the construction and arrangement of the elements of the system as shown in the preferred and other exemplary embodiments is illustrative only. Although only a certain number of embodiments have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the assemblies may be reversed or otherwise varied, the length or width of the structures and/or members or connectors or other elements of the system may be varied, the nature or number of adjustment or attachment positions provided between the elements may be varied. It should be noted that the elements and/or assemblies of the system may be constructed from any of a wide variety of materials that provide sufficient strength or durability. Accordingly, all such modifications are intended to be included within the scope of the present disclosure. The order or sequence of any process or method steps may be varied or re-sequenced according to alternative embodiments. Other substitutions, modifications, changes and omissions may be made in the design, operating conditions and arrangement of the preferred and other exemplary embodiments without departing from the scope of the present subject matter.

## Claims

1. A system for controlling access of a mobile electronic device to vehicle network, comprising:
a body area network for carrying signals through an occupant of a vehicle, wherein the network includes an electrode located in the seat of the vehicle and, a signal generator for providing a signal to the electrode;
wherein the mobile electronic device is configured to detect the signal provided to the electrode and conducted through the body area network;
wherein the mobile electronic device is configured to electronically couple to the vehicle network upon detecting the signal;
**characterized in that**
the vehicle network is configured to provide a security token to the mobile electronic device when (1) the mobile electronic device is electronically coupled to the vehicle network and (2) the system determines that the occupant is seated in the vehicle based on an amount of electric field coupling between the occupant and the electrode; and
the vehicle network is configured to restrict remote access to the vehicle network to only mobile electronic devices having the provided security token.

2. The system of claim 1, wherein the vehicle network is configured to require the user to interact with the mobile device to acknowledge receipt of the security token.

3. The system of claim 1, wherein the vehicle network is configured to no longer accept the provided security token after a predetermined time period.

4. The system of claim 1, wherein the vehicle network is configured to restrict access to the network unless the mobile electronic device provides indication that the mobile electronic device is connected to the body area network.

5. The system of claim 1, wherein the vehicle includes a second body area network and wherein the vehicle network is configured to change an access level provided to the mobile electronic device based on the body area network that the mobile electronic device is coupled to.

6. The system of claim 5, wherein the access level provided to the mobile electronic device is different for a mobile electronic device coupled to the first body area network operating through an occupant positioned in the driver seat than for a mobile electronic device coupled to the second body area network operating through an occupant positioned in a passenger seat of the vehicle.

7. The system of claim 6, wherein the mobile electronic device coupled to the first mentioned body area network has less restrictive access than the mobile electronic device coupled to the second body area network.

8. The system of claim 1, wherein vehicle network is configured to adjust an access level provided to the mobile electronic device based on information stored by the mobile electronic device and provided to the vehicle network.

9. The system of claim 1, wherein the vehicle network is configured to prevent operation of the vehicle unless the mobile electronic device is coupled to the network.

10. The system of claim 1, wherein the connection between the mobile electronic device and the vehicle network is discontinued if the mobile electronic device is no longer coupled with the body area network.

11. The system of claim 10, wherein the connection between the mobile electronic device and the vehicle network is discontinued if the mobile electronic device is not located in the vehicle and wherein the location of the mobile device is determined using an indoor positioning system.

12. The system of claim 1, wherein the vehicle network is configured to restrict access to the network unless the mobile electronic device provides indication that the mobile electronic device is connected to the body area network.

13. The system of claim 1, wherein the vehicle network is configured to no longer accept the approved security token after a predetermined time period.

14. The system of claim 1,
wherein the vehicle network is configured to restrict access to the network until the network receives a notice from the mobile electronic device indicating that the mobile electronic device has received the security token.

15. The system of claim 1,
wherein the vehicle network is configured to only allow the mobile electronic device to couple with the network if the mobile electronic device provides an approved security token to the vehicle network and an indication that the mobile electronic device is coupled with the body area network; and
wherein the mobile electronic device receives the approved security token via an advance registration process and the vehicle network is configured to restrict operation of the vehicle until the mobile device provides the approved security token to the vehicle network and is coupled to the vehicle network.

## Patentansprüche

1. System zum Steuern eines Zugriffs einer mobilen elektronischen Vorrichtung auf ein Fahrzeugnetzwerk, umfassend:
ein körpernahes Netzwerk zum Übertragen von Signalen durch einen Insassen eines Fahrzeugs, wobei das Netzwerk eine Elektrode, die in einem Sitz des Fahrzeugs angebracht ist, und einen Signalgenerator zum Bereitstellen eines Signals für die Elektrode umfasst;
wobei die mobile elektronische Vorrichtung konfiguriert ist zum Erkennen des Signals, das der Elektrode bereitgestellt wird und durch das körpernahe Netzwerk geleitet wird;
wobei die mobile elektronische Vorrichtung konfiguriert ist, um nach dem Erkennen des Signals mit dem Fahrzeug elektronisch verbunden zu werden;
**dadurch gekennzeichnet, dass**
das Fahrzeugnetzwerk konfiguriert ist zum Bereitstellen eines Sicherheitstokens für die mobile elektronische Vorrichtung, wenn (1) die mobile elektronische Vorrichtung mit dem Fahrzeugnetzwerk elektronisch verbunden ist und (2) das System ermittelt, dass, aufgrund einer Größe einer elektrischen Feldkopplung zwischen dem Insassen und der Elektrode, der Insasse in dem Fahrzeug sitzt; und
das Fahrzeugnetzwerk konfiguriert ist zum Einschränken eines fernen Zugriffs auf das Fahrzeugnetzwerk nur auf mobile elektronische Vorrichtungen, die das bereitgestellte Sicherheitstoken aufweisen.

2. System nach Anspruch 1, wobei das Fahrzeugnetzwerk konfiguriert ist zum Auffordern des Benutzers, um mit der mobilen Vorrichtung zu interagieren, um den Empfang des Sicherheitstokens zu bestätigen.

3. System nach Anspruch 1, wobei das Fahrzeugnetzwerk konfiguriert ist, um nach einem vorbestimmten Zeitraum das bereitgestellte Sicherheitstoken nicht mehr zu akzeptieren.

4. System nach Anspruch 1, wobei das Fahrzeugnetzwerk konfiguriert ist, um einen Zugriff auf das Netzwerk einzuschränken, ausgenommen, wenn die mobile elektronische Vorrichtung einen Hinweis bereitstellt, dass die mobile elektronische Vorrichtung mit dem körpernahen Netzwerk verbunden ist.

5. System nach Anspruch 1, wobei das Fahrzeug ein zweites körpernahes Netzwerk aufweist und wobei das Fahrzeugnetzwerk konfiguriert ist, um eine Zugriffsebene zu verändern, die der mobilen elektronischen Vorrichtung aufgrund des körpernahen Netzwerks bereitgestellt wird, mit dem die mobile elektronische Vorrichtung verbunden ist.

6. System nach Anspruch 5, wobei die Zugriffsebene, die der mobilen elektronischen Vorrichtung bereitgestellt wird, unterschiedlich ist für eine mobile elektronische Vorrichtung, die mit dem ersten körpernahen Netzwerk verbunden ist, das durch einen Insassen betrieben wird, der sich auf dem Fahrersitz befindet, als für eine mobile elektronische Vorrichtung, die mit dem zweiten körpernahen Netzwerk verbunden ist, das durch einen Insassen betrieben wird, der sich auf einem Passagiersitz des Fahrzeugs befindet.

7. System nach Anspruch 6, wobei die mobile elektronische Vorrichtung, die mit dem ersten erwähnten körpernahen Netzwerk verbunden ist, einen weniger eingeschränkten Zugriff als die mobile elektronische Vorrichtung aufweist, die mit dem zweiten körpernahen Netzwerk verbunden ist.

8. System nach Anspruch 1, wobei das Fahrzeugnetzwerk konfiguriert ist, um eine Zugriffsebene anzupassen, die der mobilen elektronischen Vorrichtung aufgrund von Informationen bereitgestellt wird, die in der mobilen elektronischen Vorrichtung gespeichert sind und die dem Fahrzeugnetzwerk bereitgestellt werden.

9. System nach Anspruch 1, wobei das Fahrzeugnetzwerk konfiguriert ist, um einen Betrieb des Fahrzeugs zu vermeiden, ausgenommen, wenn die mobile elektronische Vorrichtung mit dem Netzwerk verbunden ist.

10. System nach Anspruch 1, wobei die Verbindung zwischen der mobilen elektronischen Vorrichtung und dem Fahrzeugnetzwerk unterbrochen wird, wenn die mobile elektronische Vorrichtung nicht mehr mit dem körpernahen Netzwerk verbunden ist.

11. System nach Anspruch 10, wobei die Verbindung zwischen der mobilen elektronischen Vorrichtung und dem Fahrzeugnetzwerk unterbrochen wird, wenn sich die mobile elektronische Vorrichtung nicht mehr in dem Fahrzeug befindet, und wobei der Standort der mobilen Vorrichtung mithilfe eines Innenraumpositionsbestimmungssystems ermittelt wird.

12. System nach Anspruch 1, wobei das Fahrzeugnetzwerk konfiguriert ist, um einen Zugriff auf das Netzwerk einzuschränken, ausgenommen, wenn die mobile elektronische Vorrichtung einen Hinweis bereitstellt, dass die mobile elektronische Vorrichtung mit dem körpernahen Netzwerk verbunden ist.

13. System nach Anspruch 1, wobei das Fahrzeugnetzwerk konfiguriert ist, um nach einem vorbestimmten Zeitraum das zugelassene Sicherheitstoken nicht mehr zu akzeptieren.

14. System nach Anspruch 1,
wobei das Fahrzeugnetzwerk konfiguriert ist, um einen Zugriff auf das Netzwerk einzuschränken, bis das Netzwerk eine Mitteilung von der mobilen elektronischen Vorrichtung empfängt, die anzeigt, dass die mobile elektronische Vorrichtung das Sicherheitstoken empfangen hat.

15. System nach Anspruch 1,
wobei das Fahrzeugnetzwerk konfiguriert ist, um nur der mobilen elektronischen Vorrichtung zu erlauben, sich mit dem Netzwerk zu verbinden, wenn die mobile elektronische Vorrichtung dem Fahrzeugnetzwerk ein zugelassenes Sicherheitstoken und einen Hinweis bereitstellt, dass die mobile elektronische Vorrichtung mit dem körpernahen Netzwerk verbunden ist; und
wobei die mobile elektronische Vorrichtung das zugelassene Sicherheitstoken über einen Voranmeldungsprozess empfängt und wobei das Fahrzeugnetzwerk konfiguriert ist, um den Betrieb des Fahrzeugs einzuschränken, bis die mobile Vorrichtung dem Fahrzeugnetzwerk das zugelassene Sicherheitstoken bereitstellt und mit dem Fahrzeugnetzwerk verbunden ist.

## Revendications

1. Système permettant de commander l'accès d'un dispositif électronique mobile à un réseau de véhicule, comprenant :
un réseau corporel pour acheminer des signaux à travers un occupant d'un véhicule, le réseau incluant une électrode localisée dans le siège du véhicule et, un générateur de signaux pour fournir un signal à l'électrode ;
dans lequel le dispositif électronique mobile est configuré pour détecter le signal fourni à l'électrode et dirigé à travers le réseau corporel ;
dans lequel le dispositif électronique mobile est configuré pour se coupler électroniquement au réseau de véhicule lors de la détection du signal ;
**caractérisé en ce que**
le réseau de véhicule est configuré pour fournir un jeton de sécurité au dispositif électronique mobile lorsque (1) le dispositif électronique mobile est couplé électroniquement au réseau de véhicule et (2) le système détermine le fait que l'occupant est assis dans le véhicule sur la base d'une quantité de couplage de champ électrique entre l'occupant et l'électrode ; et
le réseau de véhicule est configuré pour limiter l'accès à distance au réseau de véhicule à uniquement des dispositifs électroniques mobiles possédant le jeton de sécurité fourni.

2. Système de la revendication 1, dans lequel le réseau de véhicule est configuré pour exiger que l'utilisateur soit en interaction avec le dispositif électronique mobile afin d'accuser réception du jeton de sécurité.

3. Système de la revendication 1, dans lequel le réseau de véhicule est configuré pour ne plus accepter le jeton de sécurité fourni après un intervalle de temps prédéterminé.

4. Système de la revendication 1, dans lequel le réseau de véhicule est configuré pour limiter l'accès au réseau à moins que le dispositif électronique mobile n'ait fourni une indication que le dispositif électronique mobile est connecté au réseau corporel.

5. Système de la revendication 1, dans lequel le véhicule inclut un deuxième réseau corporel et dans lequel le réseau de véhicule est configuré pour changer un niveau d'accès fourni au dispositif électronique mobile sur la base du réseau corporel auquel le dispositif électronique mobile est couplé.

6. Système de la revendication 5, dans lequel le niveau d'accès fourni au dispositif électronique mobile est différent pour un dispositif électronique mobile couplé au premier réseau corporel opérant à travers un occupant positionné dans le siège de conducteur que pour un dispositif électronique mobile couplé au deuxième réseau corporel opérant à travers un occupant positionné dans un siège de passager du véhicule.

7. Système de la revendication 6, dans lequel le dispositif électronique mobile couplé au premier réseau corporel mentionné a un accès moins restrictif que le dispositif électronique mobile couplé au deuxième réseau corporel.

8. Système de la revendication 1, dans lequel le réseau de véhicule est configuré pour ajuster un niveau d'accès fourni au dispositif électronique mobile sur la base d'informations stockées par le dispositif électronique mobile et fournies au réseau de véhicule.

9. Système de la revendication 1, dans lequel le réseau de véhicule est configuré pour empêcher le fonctionnement du véhicule à moins que le dispositif électronique mobile ne soit couplé au réseau.

10. Système de la revendication 1, dans lequel la connexion entre le dispositif électronique mobile et le réseau de véhicule est interrompue si le dispositif électronique mobile n'est plus couplé avec le réseau corporel.

11. Système de la revendication 10, dans lequel la connexion entre le dispositif électronique mobile et le réseau de véhicule est interrompue si le dispositif électronique mobile n'est pas localisé dans le véhicule et dans lequel la localisation du dispositif électronique mobile est déterminée grâce à l'utilisation d'un système de positionnement en intérieur.

12. Système de la revendication 1, dans lequel le réseau de véhicule est configuré pour limiter l'accès au réseau à moins que le dispositif électronique mobile n'ait fourni une indication que le dispositif électronique mobile est connecté au réseau corporel.

13. Système de la revendication 1, dans lequel le réseau de véhicule est configuré pour ne plus accepter le jeton de sécurité approuvé après un intervalle de temps prédéterminé.

14. Système de la revendication 1,
dans lequel le réseau de véhicule est configuré pour limiter l'accès au réseau jusqu'à ce que le réseau reçoive une notification en provenance du dispositif électronique mobile indiquant que le dispositif électronique mobile a reçu le jeton de sécurité.

15. Système de la revendication 1,
dans lequel le réseau de véhicule est configuré pour uniquement autoriser le dispositif électronique mobile à se coupler avec le réseau si le dispositif électronique mobile fournit un jeton de sécurité approuvé au réseau de véhicule et qu'une indication que le dispositif électronique mobile est couplé avec le réseau corporel ; et
dans lequel le dispositif électronique mobile reçoit le jeton de sécurité approuvé via un processus d'enregistrement par avance et le réseau de véhicule est configuré pour limiter le fonctionnement du véhicule jusqu'à ce que dispositif mobile ait fourni le jeton de sécurité approuvé au réseau de véhicule et est couplé au réseau de véhicule.
